# EUROPEAN PATENT APPLICATION

(11) **EP 4 604 076 A1**
(43) Date of publication of application: **20.08.2025**
(21) Application number: 24157874.9
(22) Date of filing: 19.02.2024
(51) Int. Cl.: G06V 10/762, G06V 10/774, G06V 10/778

(54) **METHOD AND SYSTEM FOR IMPROVING COMPUTER VISION MODELS IN TERMS OF DATA RECOGNITION, ACTIVE LEARNING AND DATA LABELING**

(71) Applicant: Siemens Aktiengesellschaft, 80333 München (DE)
(72) Inventor: Golovanev, Iakov, 1990-24 Lisbon (PT)
(74) Representative: Siemens Patent Attorneys

(57) **Abstract**

The general concept of the present invention is to provide a system and a method for improving computer vision models in terms of data recognition, active learning and data labeling; said system and method comprising:
a) an execution instance being enabled to execute a first model version providing a first prediction result on a specified test dataset;
b) said execution instance being enabled to execute a second model version providing a second prediction result on a specified test dataset;
c) a comparison instance being enabled to compare the first prediction result with the second prediction result and to identify the differences among the first and the second prediction results as image parts corresponding to the difference;
d) an evaluation instance being enabled to produce a clustering of the detected differences as domain-specific objects wherein the clustering comprises a feature analysis to extract features from said image parts;
e) said evaluation instance being further enabled to review the produced clusters thereby labeling the objects in the produced clusters from the identified image parts, and
f) said execution instance being further enabled to use the labelled objects in the clusters for future training iterations for the learned detection of new sub-classes of the domain specific objects in order to generate a new model version and/or for the execution of said new computer vision model version.

These measures provide a system and a method that are enabled to benefit from an automatic comparison of the predictions of different versions of the computer vision model, particularly by the clustering and the interpretation according to the task domain of the detected changes.

## Description

The present invention relates to a method and a system for improving computer vision models in terms of data recognition, active learning and data labeling.

Object recognition in a huge set of data is a demanding process always struggling with the goal of providing a high fidelity for the recognition of the objects in question. The training of computer vision models therefore is often an iterative process where data scientists have to evaluate the model quality after each iteration. To determine whether the computer vision model has improved, it is usually evaluated on a test dataset using a predefined set of task-specific quality metrics.

While this approach allows us to understand if the computer vision model is actually improving as long as the quality metrics are representative of the target task, it is not in-terpretable in the sense that it does not provide the detailed information on how exactly the computer vision model is improving.

For example, in the problem of semantic understanding of urban street scenes for autonomous driving, where many types and colors of vehicles are present (e.g., small two-seat vehicles, SUVs, vans, motorcycles, etc.), it is almost impossible to check whether the computer vision model is improved equally on each type of vehicle unless there are different labels for them, which is often not the case.

For this reason, it is the objective of the present invention to provide an alternative approach that allows an interpretation of the improvement of a version of a computer vision model in domain-specific terms (e.g., detection or classification of specific types of objects, not explicitly labeled with separate classes). In fact, it would be desirable if such an approach could be integrated into software that follows the MLOps paradigm, significantly increasing the interpretation capabilities of various experiment versioning solutions.

The existing MLOps platforms, such as MLflow or CML, can be used for managing machine learning experiments, including model evaluation. While many methods are used for model quality evaluation, their interpretative capabilities are limited by the available labels for the data samples. For example, in the object detection problem, the overall improvement of the metric on a test dataset may come at the cost of significantly worse predictions for certain rare objects that belong to the same class as the more frequent and well-detected objects due to metric averaging over all the samples.

This problem is usually solved by manually analyzing the model predictions after each retraining iteration, which is expensive and time-consuming. Alternatively, there are many techniques that allow interpreting machine learning model predictions, such as SHAP or LIME. These techniques, however, can only analyze the predictions of a single instance of the model, and there is no simple way to compare the results of the analysis across several versions of the model.

This objective is achieved according to the present invention by the measures taken in accordance with the independent claims. Further advantageous embodiments are proposed by the dependent claims.

The general concept of the present invention is to provide a system for improving computer vision models in terms of data recognition, active learning and data labeling; said system comprising:
a) an execution instance being enabled to execute a first model version providing a first prediction result on a specified test dataset;
b) said execution instance being enabled to execute a second model version providing a second prediction result on a specified test dataset;
c) a comparison instance being enabled to compare the first prediction result with the second prediction result and to identify the differences among the first and the second prediction results as image parts corresponding to the difference;
d) an evaluation instance being enabled to produce a clustering of the detected differences as domain-specific objects wherein the clustering comprises a feature analysis to extract features from said image parts;
e) said evaluation instance being further enabled to review the produced clusters thereby labeling the objects in the produced clusters from the identified image parts, and
f) said execution instance being further enabled to use the labelled objects in the clusters for future training iterations for the learned detection of new sub-classes of the domain specific objects in order to generate a new model version and/or for the execution of said new computer vision model version.

With respect to the method, the aforementioned objective is achieved according to the present invention by a method for improving computer vision models in terms of data recognition, active learning and data labeling; said method comprising the steps of:
a) executing a first model version providing a first prediction result on a specified test dataset;
b) executing a second model version providing a second prediction result on said specified test dataset;
c) comparing the first prediction result with the second prediction result and identifying the differences among the first and the second prediction results as image parts corresponding to the difference;
d) producing a clustering of the detected differences as domain-specific objects wherein the clustering comprises a feature analysis to extract features from said image parts;
e) reviewing the produced clusters thereby labeling the objects in the produced clusters from the identified image parts, and
f) using the labelled objects in the clusters for future training iterations for the learned detection of new sub-classes of the domain specific objects in order to generate a new model version and/or for the execution of said new computer vision model version.

These measures provide a system and a method that are enabled to benefit from an automatic comparison of the predictions of different versions of the computer vision model, particularly by the clustering and the interpretation according to the task domain of the detected changes.

In a preferred embodiment of the present invention, the comparison instance may be further enabled to enhance the data segmentation by the provision of the differences. Thus, the detected differences thereby can be used with the clustering to also improve the segmentation of the test dataset and, of course, future datasets to be analyzed.

Further, the evaluation instance can be further enabled to combine features of the original specific test dataset and features identified from the first and second prediction results and to cluster these features using an algorithm handling high dimensional data, like DBSCAN, or using a conventional algorithm, like K-means, after dimension reduction using PCA or T-SNE. This feature supports the automatic approach of the present invention since it helps to lower the complexity level of the domain-specific data analysis tasks. A further preferred embodiment of the present invention can be achieved when the evaluation instance can be further enabled to use a neural network, preferably a pretrained diffusion model, for the feature extraction, preferably also including a dimension reduction of the extracted features.

Furthermore, the evaluation instance can be further enabled to extract the features of image parts for yet non-labelled domain-specific objects, the same clustering procedure can then be applied for a detection of repeatedly false-detected positives and/or negatives in the image parts thereby also enabling the addition of these yet non-labelled domain-specific objects in a training data set for a future computer vision model version.

Preferred embodiments of the present invention will be described in more detail with reference to the attached drawings (like features have like reference numbers) which depict in:
- Figure 1: schematically the general principle of a method for improving computer vision models in terms of data recognition, active learning and data label-ing; and
- Figure 2: schematically the general principle of applying the principle according to the method on new data material.

The present invention can be used in the environment of a multipurpose MLOps platform which is capable of an interpret-able evaluation of a computer vision versioning and provides beside others a possibility for active learning and for an automatic data labeling of objects and their respective features that have not been recognized properly by the previous versions of a now improved computer vision version.

The present invention provides a system and a method for improving computer vision models in terms of data recognition, active learning and data labeling. This system comprises a number of components/instances having specific capabilities. An execution instance is provided that is enabled to execute a first computer vision model version providing a first prediction result on a specified test dataset. Said execution instance is further enabled to execute a second computer vision model version providing a second prediction result on said specified test dataset. A comparison instance is further provided that is enabled to compare the first prediction result with the second prediction result and to identify the differences among the first and the second prediction results as image parts corresponding to the differences. Thus, said comparison instance provides as output a clear indication of parts in the image (here the specified test dataset) that differs in terms of the object recognition from each other. A possible output can be for instance that specific objects in the specified test dataset are recognized by one computer vision model version but not by the other one.

An evaluation instance is provided that is enabled to produce a clustering of the detected differences as domain-specific objects wherein the clustering comprises a feature analysis to extract features from said image parts. Thus, the evaluation instance supports the grouping of those objects being part of the identified differences into domain-specific subgroups. Said evaluation instance is further enabled to review the produced clusters thereby labeling the objects in the produced clusters from the identified image parts, thus making them assessable for the next version of an enhanced computer vision model version.

In particular, said execution instance is now further enabled to use the labelled objects in the clusters for future training iterations for the learned detection of new sub-classes of the domain specific objects in order to generate a new model version and/or for the execution of said new computer vision model version.

Thus, the core feature of this platform is an automatic comparison instance of the predictions of different model versions on the specified test dataset. This comparison is inherently task-specific, and in the context of computer vision tasks it is most helpful for segmentation, although also applicable for object detection and classification.

For the example of segmentation models, the key idea is to extract the difference of the segmentation masks that are predicted by two different model versions, for each sample in the specified test dataset, and then to cluster these differences as domain-specific objects. This is done by extracting the image parts, corresponding to the predicted mask differences, and then applying for example a neural network, such as a pretrained diffusion model, to extract relevant features from these identified image parts. In fact, the features from original image segments and the outputs of various computer vision models can be combined and then clustered either using an algorithm that can handle high dimensional data, like DBSCAN, or by using a conventional algorithm like K-means after dimension reduction with PCA or T-SNE.

Alternatively, dimension reduction can be included in the neural network for the feature extraction. The produced clusters can then also be reviewed and labeled manually, with the labels used for future training iterations.

This approach unlocks the following possibilities for the model training process:
All the objects, presented in model predictions or ground truth labels, can be automatically detected, clustered, and analyzed, as a result, apart from evaluating the quality metrics for the whole dataset, it can also be done for automatically detected sub-classes of objects.

By extracting the objects, predicted by a computer vision model version but yet not marked in labels, the same clustering procedure can be applied for detecting repeatedly false positives in unlabeled data, so that image data comprising these objects can be added to the training dataset for future versions of the computer vision model.

Similarly, repeatedly false negatives, presented in labels but yet not detected by the actual version of the computer vision model, can be extracted, thus making this information also available for use of an additional labeling of these objects in the training dataset.

As a result, manual validation of the model predictions on the specified test dataset after each experiment can be skipped, and a more detailed set of metrics can be evaluated.

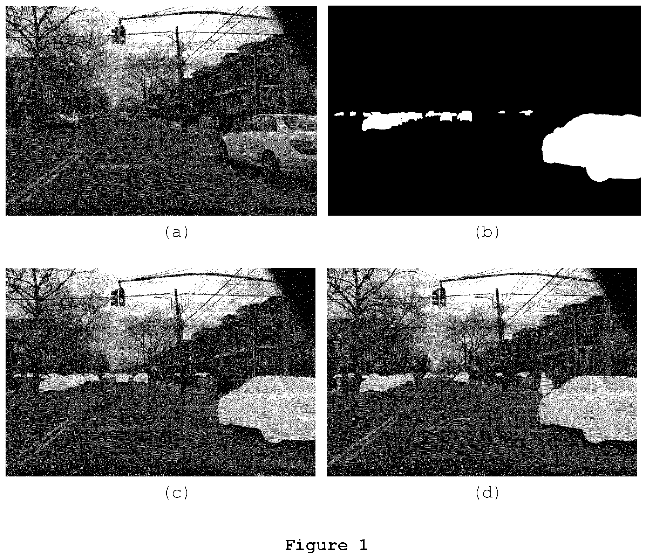

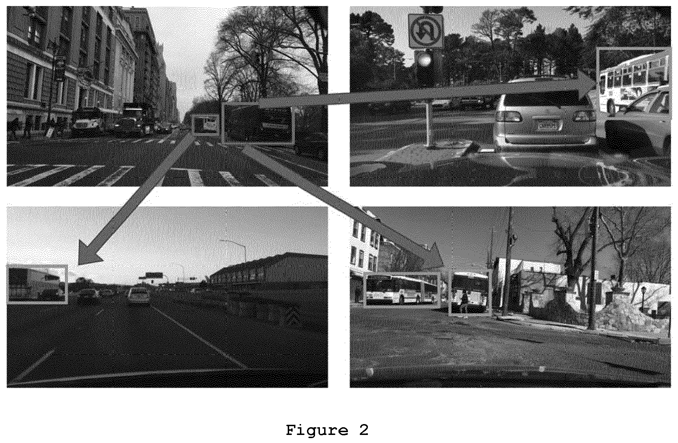

This process is demonstrated in the Figures 1. Apart from improving the overall experiment efficiency and traceability, this method/platform can be used to implement an active learning procedure as a part of the MLOps system. By comparing the predictions of a specific version of the model with the labels, it is possible to identify the types of objects that were not detected and select the new samples that contain these objects for labeling. This can be achieved by extracting the features from the unlabeled images, similarly to the way described above. This process is demonstrated in the Figure 2.

Figure 1 schematically shows the general principle of a method for improving computer vision models in terms of data recognition, active learning and data labeling. Figure 1(a) shows the original image (that can be used as specified image dataset). The ground truth mask related to this original image is shown in Figure 1(b). Figure 1(c) now shows the prediction of a first computer vision model over the original image. This prediction equals to the ground truth mask shown in Figure 1(b). However, the prediction of a second computer vision model over the original image shows some errors in the recognition that are highlighted with contours. The errors here comprise two vehicles with that were not detected (see in the central part of Figure 1(d). Further, two people were detected as vehicles which can happen due to the second model being trained on the wrong labels. Obviously, these errors can now be clustered into a sub-group of detected objects that are not vehicles.

Figure 2 now schematically shows the general principle of applying the principle according to the method on new data material. The upper left figures shows the original image with the two buses that were not detected by the second computer vision model. These buses are again marked with rectangles. The other figures now show the newly suggested objects on other unlabeled samples that are similar to the target ones of the upper left figure, also marked with the rectangles. The updated version of the second computer vision model now knows the sub-class of vehicles corresponding to buses and will now be able to recognize the objects belonging to this newly learned sub-class. This is indicated by the rectangles in the upper right image and the lower left and right image.

Again, the existing MLOps platforms offer various capabilities for versioning of machine learning models, including comparison of model hyperparameters, learning curves, metrics on test dataset, etc. However, this information gives only limited understanding of the model improvement, unless the quality metrics have improved significantly. A manual analysis of the predictions is required to get more details, which is time-consuming and can be done only for a small test dataset.

To the contrary, the present invention, optionally also in addition to the existing evaluation techniques, allows to directly calculate the differences between the predictions of two versions of the computer vision model to receive a detailed overview of the improvement of the next computer vision model version. None of the existing solutions offers a direct comparison of various model versions, as well as a way to use the comparison results to further extend or validate the training dataset.

Apart from improving the interpretability of the experiment results, this approach can also help to plan the next experiments, most importantly, by enabling an active learning process, where the new samples are selected based on the errors made by the previous model on the test dataset.

This is especially useful when a saturation of the recognition capabilities of a computer vision model version has already been achieved and the metric on the test dataset has stopped improving. The identification of the objects that are not well-detected or classified provide detailed hints for the possible extension of the training dataset that could help to address these classification or detection errors.

Additionally, this solution can be applied in a semi-supervised manner to validate the training dataset by checking whether the samples are labeled consistently, i.e., whether the objects, labeled, for example, as motorcycles, are labeled so on every image. This would help to avoid situations where some of the objects, as in the previous image, are labeled and some are not due to human error.

## Claims

1. A system for improving computer vision models in terms of data recognition, active learning and data labeling; said system comprising:
a) an execution instance being enabled to execute a first model version providing a first prediction result on a specified test dataset;
b) said execution instance being enabled to execute a second model version providing a second prediction result on said specified test dataset;
c) a comparison instance being enabled to compare the first prediction result with the second prediction result and to identify the differences among the first and the second prediction results as image parts corresponding to the difference;
d) an evaluation instance being enabled to produce a clustering of the detected differences as domain-specific objects wherein the clustering comprises a feature analysis to extract features from said image parts; and
e) said evaluation instance being further enabled to review the produced clusters thereby labeling the objects in the produced clusters from the identified image parts, and
f) said execution instance being further enabled to use the labelled objects in the clusters for future training iterations for the learned detection of new sub-classes of the domain specific objects in order to generate a new model version and/or for the execution of said new computer vision model version.

2. The system according to claim 1, wherein
the comparison instance being further enabled to enhance the data segmentation by the provision of the differences.

3. The system according to claim 1 or 2, wherein
the evaluation instance being further enabled to combine features of the original specific test dataset and features identified from the first and second prediction results and to cluster these features using an algorithm handling high dimensional data, like DBSCAN, or using a conventional algorithm, like K-means, after dimension reduction using PCA or T-SNE.

4. The system according to any of the preceding claims, wherein the evaluation instance being further enabled to use a neural network, preferably a pretrained diffusion model, for the feature extraction, preferably also including a dimension reduction of the extracted features.

5. The system according to any of the preceding claims, wherein the evaluation instance being further enabled to extract the features of image parts for yet non-labelled domain-specific objects, the same clustering procedure is applied for a detection of repeatedly false-detected positives and/or negatives in the image parts thereby also enabling the addition of these yet non-labelled domain-specific objects in a training data set for a future computer vision model version .

6. A method for improving computer vision models in terms of data recognition, active learning and data labeling; said method comprising the steps of:
a) executing a first model version providing a first prediction result on a specified test dataset;
b) executing a second model version providing a second prediction result on a specified test dataset;
c) comparing the first prediction result with the second prediction result and identifying the differences among the first and the second prediction results as image parts corresponding to the difference;
d) producing a clustering of the detected differences as domain-specific objects wherein the clustering comprises a feature analysis to extract features from said image parts;
e) reviewing the produced clusters thereby labeling the objects in the produced clusters from the identified image parts, and
f) using the labelled objects in the clusters for future training iterations for the learned detection of new sub-classes of the domain specific objects in order to generate a new model version and/or for the execution of said new computer vision model version.

7. The method according to claim 6, wherein
the comparison is enhancing the data segmentation by the provision of the differences.

8. The method according to claim 6 or 7, wherein
an evaluation step is combining features of the original specific test dataset and features identified from the first and second prediction results and is clustering these features using an algorithm handling high dimensional data, like DBSCAN, or using a conventional algorithm, like K-means, after dimension reduction using PCA or T-SNE.

9. The method according to any of the preceding claims 6 to 8, wherein the evaluation step is using a neural network, preferably a pretrained diffusion model, for the feature extraction, preferably also including a dimension reduction of the extracted features.

10. The method according to any of the preceding claims 6 to 9, wherein the evaluation step is extracting the features of image parts for yet non-labelled domain-specific objects, the same clustering procedure is applied for a detection of repeatedly false-detected positives and/or negatives in the image parts thereby also enabling the addition of these yet non-labelled domain-specific objects in a training data set for a future computer vision model version.
